# DEMANDE DE BREVET EUROPEEN

(11) **EP 4 137 993 A1**
(43) Date de publication de la demande: **22.02.2023**
(21) Numéro de dépôt: 22189957.8
(22) Date de dépôt: 11.08.2022
(51) Int. Cl.: G06K 19/07

(54) **ALIMENTATION D'UN DISPOSITIF ELECTRONIQUE**

(30) Priorité: 17.08.2021 FR 2108723
(71) Demandeur: STMicroelectronics (Rousset) SAS, 13790 Rousset (FR); STMicroelectronics (ALPS) SAS, 38000 Grenoble (FR)
(72) Inventeur: TRAMONI, Alexandre, 83330 LE BEAUSSET (FR); ARNOULD, Patrick, 38340 VOREPPE (FR)
(74) Mandataire: Cabinet Beaumont

(57) **Abrégé**

La présente description concerne un procédé de démarrage d'un dispositif électronique, comprenant :
- au moins une carte de circuit intégré universel ou au moins un élément sécurisé ;
- au moins un circuit d'alimentation de ladite carte ou dudit élément sécurisé ; et
- au moins un module de communication en champ proche, dans lequel lorsque le module de communication en champ proche passe d'un état en veille ou d'un état inactif à un état actif, les opérations successives suivantes sont réalisées :
- les composants et circuits dudit dispositif électronique sont démarrés ;
- des programmes du dispositif électronique et ladite carte ou ledit élément sécurisé sont démarrés au même moment.

## Description

La présente description concerne de façon générale les systèmes et dispositifs électroniques, et l'alimentation en énergie de ces systèmes et dispositifs. La présente description se rapporte, plus particulièrement, aux dispositifs électroniques adaptés à la communication en champ proche (Near Field Communication, NFC), et à l'adaptation des moyens d'alimentation de tels dispositifs électroniques.

### Technique antérieure

Les communications sans fil sont de plus en plus utilisées de nos jours pour différentes applications telles que des échanges d'informations, des paiements bancaires, des échanges d'énergie, etc. Il existe plusieurs types de communication sans fil, par exemple, les communications en champ proche (Near Field Communication, NFC), les communications utilisant des hautes fréquences à plus longue distance comme les communications Bluetooth, etc.

Il serait souhaitable de pouvoir améliorer au moins en partie certains aspects des dispositifs connus adaptés à la technologie de communication en champ proche.

### Résumé de l'invention

Il existe un besoin pour des dispositifs adaptés à la technologie de communication en champ proche plus performant.

Il existe un besoin pour des dispositifs adaptés à la technologie de communication en champ proche qui consomme moins d'énergie.

Il existe un besoin pour des dispositifs adaptés à la technologie de communication en champ proche démarrant plus rapidement.

Un mode de réalisation pallie tout ou partie des inconvénients des dispositif connus adaptés à la technologie de communication en champ proche.

Un mode de réalisation prévoit un procédé de démarrage d'un dispositif électronique, comprenant :
- au moins une carte de circuit intégré universel ou au moins un élément sécurisé ;
- au moins un circuit d'alimentation de ladite carte ou dudit élément sécurisé ; et
- au moins un module de communication en champ proche,
dans lequel lorsque le module de communication en champ proche passe d'un état en veille ou d'un état inactif à un état actif, les opérations successives suivantes sont réalisées :
- les composants et circuits dudit dispositif électronique sont démarrés ;
- des programmes du dispositif électronique et ladite carte ou ledit élément sécurisé sont démarrés au même moment.

Un autre mode de réalisation prévoit un dispositif électronique comportant :
- au moins une carte de circuit intégré universel ou au moins un élément sécurisé ;
- au moins un circuit d'alimentation de ladite carte ou de dudit élément sécurisé ;
- au moins un module de communication en champ proche,
dans lequel lorsque le module de communication en champ proche passe d'un état en veille ou d'un état inactif à un état actif, les opérations successives suivantes sont réalisées :
- les composants et circuits dudit dispositif électronique sont démarrés ; et
- des logiciels du dispositif électronique et ladite carte ou ledit élément sécurisé sont démarrés au même moment.

Selon un mode de réalisation, le démarrage de ladite carte comprend les étapes successives suivantes :
- le démarrage du circuit d'alimentation de ladite carte ou dudit élément sécurisé ; et
- le démarrage logiciel de ladite carte ou dudit élément sécurisé.

Selon un mode de réalisation, pendant le démarrage dudit circuit d'alimentation, un détecteur de tension vérifie si une première source de tension reliée audit circuit d'alimentation fournit une première tension d'alimentation égale à une tension de référence.

Selon un mode de réalisation, dans lequel ledit circuit d'alimentation alimente ladite carte ou ledit élément sécurisé avec, en outre, une deuxième source d'alimentation.

Selon un mode de réalisation, le dispositif comprend un détecteur de tension adapté à déterminer si ladite première source de tension fournit une première tension d'alimentation différente de la tension de référence.

Selon un mode de réalisation, ledit au moins un module de communication en champ proche est adapté à passer dans un mode actif à chaque fois que ledit détecteur de tension détermine que ladite première tension d'alimentation est différente de la tension de référence.

Selon un mode de réalisation, dans le circuit d'alimentation de ladite carte ou dudit élément sécurisé, la première tension d'alimentation de ladite première source de tension est fournie à ladite carte ou audit élément sécurisé par l'intermédiaire d'un interrupteur commandé par un premier circuit comprenant un suiveur de tension et un premier limiteur de pente de courant.

Selon un mode de réalisation, à chaque fois que ledit détecteur de tension détermine que ladite première tension d'alimentation est différente de la tension de référence, ledit module de communication en champ proche commande le démarrage dudit premier circuit.

Selon un mode de réalisation, à chaque fois que ledit détecteur de tension détermine que ladite première tension d'alimentation est égale à la tension de référence, ledit module de communication en champ proche commande l'arrêt dudit premier circuit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un dispositif électronique ;
la figure 2 représente, très schématiquement et sous forme de blocs, un exemple de communication en champ proche ;
la figure 3 représente, schématiquement et sous forme de blocs, un mode de réalisation d'une partie d'un circuit d'alimentation d'une partie du dispositif électronique de la figure 1 ;
la figure 4 représente des chronogrammes illustrant le fonctionnement du mode de réalisation de la figure 3 ; et
la figure 5 représente des chronogrammes illustrant une partie du fonctionnement du mode de réalisation de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles utilisés lors de la mise en oeuvre de communication en champ proche ne sont pas détaillés. Les modes de réalisation décrits ci-après s'adaptent aux protocoles usuels utilisés lors de la mise en oeuvre de communication en champ proche.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

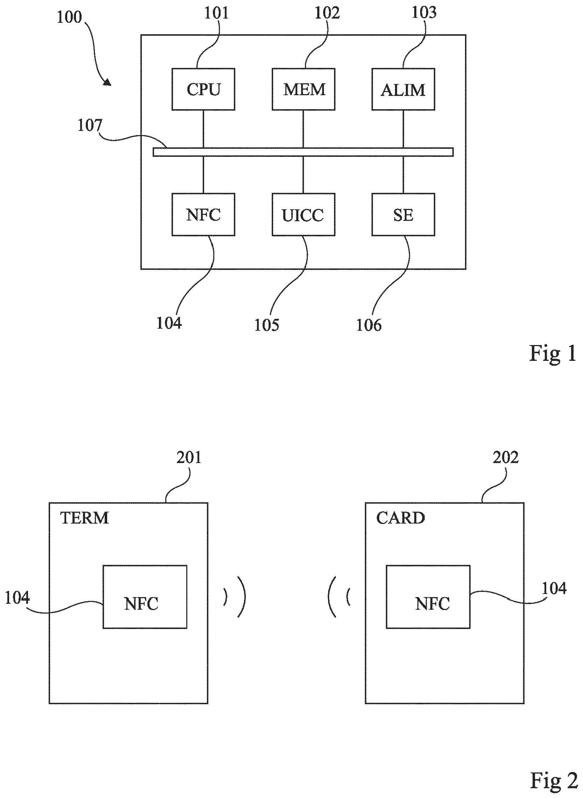

La figure 1 représente, très schématiquement et sous forme de blocs, un mode de réalisation d'un dispositif électronique 100.

Le dispositif électronique 100 comprend un processeur 101 (CPU) adapté à mettre en oeuvre différents traitements de données stockées dans des mémoires et/ou fournies par d'autres circuits du dispositif 100.

Le dispositif électronique 100 comprend, en outre, différents types de mémoires 102 (MEM), parmi lesquelles, par exemple, au moins une mémoire volatile et au moins un registre, généralement plusieurs registres. Le dispositif 100 peut comprendre, en outre et selon un exemple, une mémoire non volatile, et une mémoire morte. Chaque mémoire est adaptée à stocker différents types de données.

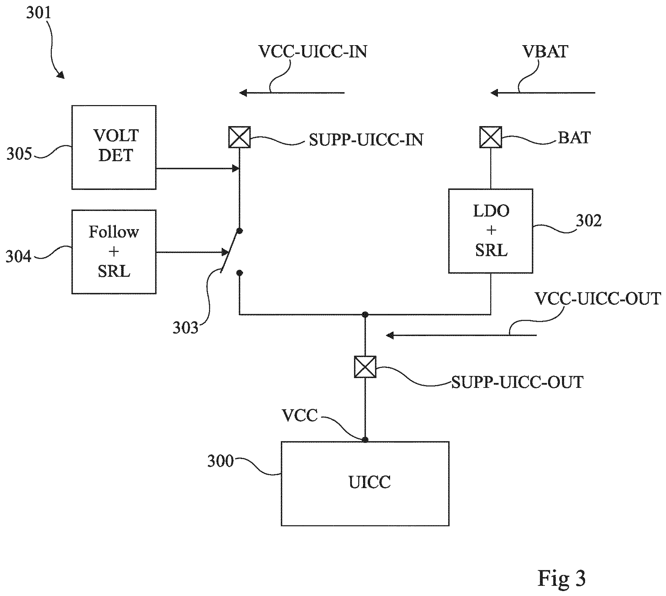

Le dispositif électronique 100 comprend, en outre, des circuits 103 (ALIM) d'alimentation. Les circuits 103 gèrent l'alimentation électrique des différents circuits et composants du dispositif 100. Les circuits 103 comprennent, par exemple, au moins une batterie, des moyens de recharge de la batterie, des circuits d'adaptation de tension, comme des régulateurs de tension, etc. Un mode de réalisation d'un des circuits d'alimentation 103 est décrit plus en détail en relation avec les figures 3 à 5.

Le dispositif électronique 100 comprend, en outre, des circuits 104 (NFC) adaptés à mettre en oeuvre une communication en champ proche, ou module 104 de communication en champ proche, ou module NFC 104. Le module NFC 104 comprend, par exemple, des circuits oscillants/résonnants, des circuits d'émission et de réception de données, des circuits de conversion de données, etc. Un exemple de communication en champ proche et les différentes fonctionnalités du module NFC 104 sont décrits plus en détail en relation avec la figure 2.

Le dispositif électronique 100 est, en outre, adapté à comprendre au moins une, voire plusieurs, cartes 105 (UICC) de circuit intégré universel (universal integrated circuit card), aussi appelé carte SIM (subscriber identification module). Une carte 105 de circuit intégré universel est une carte comprenant des données confidentielles liées à une ou plusieurs fonctions du dispositif électronique 100. Selon un exemple courant, une carte SIM du type d'une carte 105 peut être utilisée dans un téléphone cellulaire pour permettre l'utilisation des communications téléphoniques. Selon un autre exemple, une carte 105 peut permettre la mise en oeuvre d'application bancaire par un dispositif électronique, ou la mise en oeuvre d'application de transport en commun. La ou les cartes 105 peuvent être, dans certains cas, des éléments sécurisés.

Le dispositif électronique 100 comprend, en outre, au moins un élément sécurisé 106 (SE) adapté à mettre en oeuvre différentes fonctions du dispositif 100 de façon sécurisée. L'élément sécurisé 106 peut comprendre un processeur sécurisé, des mémoires destinées à stocker des données sensibles, des circuits de chiffrement et/ou de déchiffrement, des circuits permettant à communiquer de façon sécurisée avec d'autres dispositifs électroniques, etc. Selon un mode de réalisation une partie du module NFC 104 fait partie de l'élément sécurisé 106.

Le dispositif électronique 100 peut comprendre, en outre, des circuits, non représentés en figure 1, adaptés à mettre en oeuvre différentes fonctions du dispositif 100. Les circuits sont divers, et peuvent comprendre des circuits de mesures, des circuits d'analyse de données, des capteurs, d'autres circuits permettant à communiquer avec d'autres dispositifs électroniques, des dispositifs d'affichage, etc.

Les différents circuits et modules du dispositif 100 sont reliés entre eux, et peuvent communiquer, par l'intermédiaire d'un bus 107 de communication.

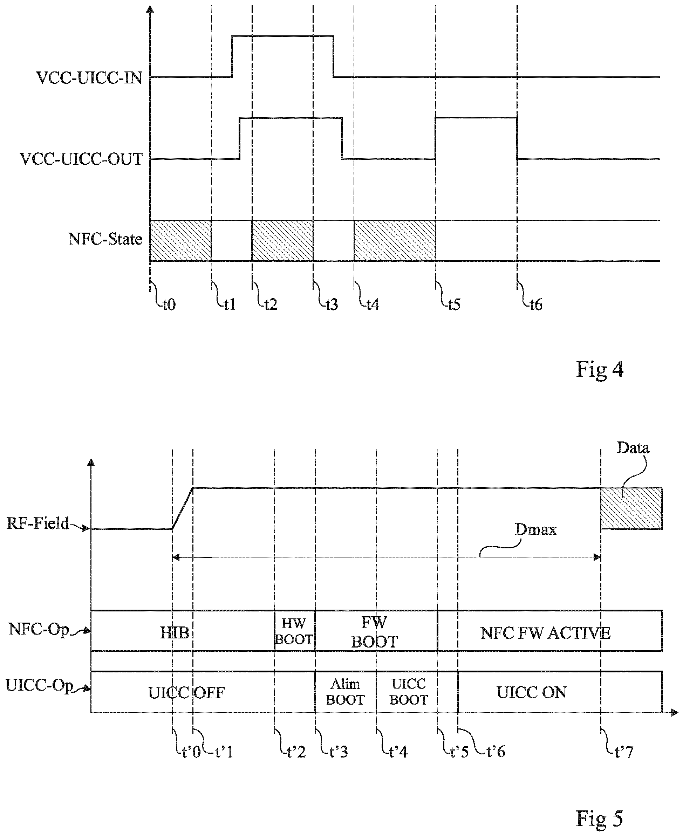

Comme dit précédemment, les circuits 103 sont adaptés à gérer l'alimentation en énergie, en tension et en courant, des différents circuits et composants du dispositif 100. Selon un mode de réalisation, les circuits 103 comprennent au moins un circuit tout particulièrement adapté à gérer les l'alimentation des cartes 105 ou l'alimentation de l'élément sécurisé 106 en prenant en compte différents modes d'alimentation des différents circuits et composants du dispositif 100. Un tel circuit est décrit plus en détails en relation avec les figures 3 et 4. Plus particulièrement, dans le mode de réalisation décrit ici, l'alimentation en énergie des cartes 105 ou de l'élément sécurisé 106 dépend du mode de fonctionnement du module NFC 104. Les différents modes de fonctionnement du module NFC 104 sont décrits en relation avec la figure 2.

La figure 2 représente schématiquement une communication sans fil, et plus particulièrement, une communication en champ proche entre des dispositifs électroniques 201 (TERM) et 202 (CARD). Le dispositif 202 est un dispositif du type du dispositif 100 décrit en relation avec la figure 1. Selon un exemple, le dispositif 201 est, aussi, un dispositif du type du dispositif 100 décrit en relation avec la figure 1.

Les technologies de communication en champs proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (transpondeur ou carte).

Dans les systèmes récents, un même dispositif peut opérer en mode carte ou en mode lecteur (par exemple dans le cas d'une communication en champ proche entre deux téléphones mobiles). Il est alors fréquent que les dispositifs soient alimentés par batterie et que leurs fonctions et circuits soient mis en veille pour ne pas consommer d'énergie entre des périodes d'utilisation. Les dispositifs doivent alors être « réveillés » quand ils se trouvent à portée l'un de l'autre.

On suppose le cas des deux dispositifs électroniques 201 et 202, dans lequel, par exemple, le dispositif 201 est un terminal, ou lecteur, et le dispositif 202 un transpondeur, mais tout ce qui va être décrit s'applique plus généralement à tout système dans lequel un transpondeur capte un champ électromagnétique rayonné par un lecteur, une borne ou un terminal.

Selon les applications, pour une communication, un des dispositifs fonctionne en mode dit lecteur tandis que l'autre fonctionne en mode dit carte, ou les deux dispositifs communiquent en mode poste à poste (peer to peer - P2P). Chaque dispositif comporte au moins un circuit électronique 104 (NFC), ou module NFC 104, de génération d'un signal radiofréquence émis à l'aide d'une antenne d'un circuit oscillant/résonnant. Le champ radiofréquence généré par l'un des dispositifs 201 ou 202 est capté par l'autre dispositif 202 ou 201 qui se trouve à portée et qui comporte également une antenne. Dans certaines applications, lorsqu'un dispositif n'est pas en cours de communication, il est commuté en mode veille afin de réduire l'énergie consommée. Cela est en particulier le cas pour les dispositifs alimentés par batterie. Lorsque le premier dispositif 201 émet un champ électromagnétique pour initier une communication avec le deuxième dispositif 202, ce champ est capté par ce deuxième dispositif 202 dès qu'il se trouve à portée. Ce champ est détecté par les circuits 104 du deuxième dispositif 202 qui, s'ils sont en veille, sont réactivés. Cela se traduit par une variation de la charge constituée par les circuits du deuxième dispositif 202 sur le circuit résonnant de génération du champ du premier dispositif 201. En pratique, la variation correspondante de phase ou d'amplitude du champ émis est détectée par le premier dispositif 201 qui entame alors un protocole de communication NFC avec le deuxième dispositif 202. Côté premier dispositif 201, on détecte en pratique si l'amplitude de la tension aux bornes du circuit résonnant descend en dessous d'un seuil ou si la tension aux bornes du circuit résonnant présente un déphasage supérieur à un seuil. Une fois que le premier dispositif 201 a détecté la présence du deuxième dispositif 202 dans son champ, il entame une procédure d'établissement de communication, mettant en oeuvre des émissions de requêtes par le premier dispositif 201 et de réponses par le deuxième dispositif 202.

Pendant une communication en champ proche, les dispositifs 201 et 202 sont disposés à portée l'un de l'autre. Plus précisément, le dispositif 202 est positionné à portée du dispositif 201 afin de pouvoir capter le champ électromagnétique du dispositif 201. A titre d'exemple, le dispositif 202 est positionné à une distance généralement inférieure à 10 cm du dispositif 201. Selon un autre exemple, le dispositif 202 est en contact mécanique avec le dispositif 201.

Le dispositif 201 est un terminal qui peut être, par exemple, fixe ou mobile. C'est le dispositif 201 qui est en charge d'amorcer la communication. A titre d'exemple, le terminal 201 est un terminal de paiement ou un téléphone mobile.

Le dispositif 202 est un transpondeur généralement mobile. Selon un mode de réalisation préféré, le transpondeur 202 est une carte à microcircuits (ou carte à puce), par exemple une carte bancaire ou une carte de transport. A titre de variante, le dispositif 202 pourrait être un téléphone mobile ou un objet connecté. Selon un mode de réalisation préféré, le dispositif 202 comprend une carte à circuit intégré universel adaptée à mettre en oeuvre les fonctionnalités d'une carte bancaire ou d'une carte de transport, et/ou un élément sécurisé. Les différents circuits électroniques du dispositif 202 adaptés à mettre en oeuvre diverses commandes envoyées par le dispositif 201, comme par exemple, des circuits d'authentification, des circuits de cryptographie, les cartes 105, l'élement sécurisé 106, etc, sont utilisés à la réception des données transmises par le transpondeur 201.

Par ailleurs, les différents modes d'alimentation de certains circuits et composants du dispositif 202 peuvent avoir une influence sur les modes d'alimentation, ou sur l'alimentation, d'autres circuits et composants du dispositif 202. En particulier, et selon un mode de réalisation, le module NFC 104 présente plusieurs modes d'alimentation qui influent sur le mode d'alimentation, et sur l'alimentation, de circuits et composants du dispositif 202, et, en particulier, des cartes 105 ou un élément sécurisé 106 du dispositif 202 (non représentés en figure 2).

Le module NFC 104 comprend au moins trois modes d'alimentation : un mode d'alimentation actif, un mode d'alimentation de veille, et un mode d'alimentation inactif. Lorsque le module NFC 104 est dans le mode d'alimentation actif, autrement dit que le module NFC 104 est dans un état actif ou est actif, le module NFC 104 est disponible pour être utilisé à tout moment. Tous les circuits et composants compris dans le module NFC 104 sont susceptibles d'être alimentés, c'est dans ce mode que le module NFC 104 est susceptible de consommer le plus d'énergie. Lorsque le module NFC 104 est dans le mode d'alimentation de veille, autrement dit que le module NFC est dans un état en veille ou est en veille, le module NFC 104 est censé pouvoir assurer un service comprenant moins de fonctionnalités, et donc seule une partie des circuits compris dans le module NFC 104 est susceptible d'être alimentée. Dans ce mode, le module NFC 104 consomme, généralement, moins d'énergie que dans le mode d'alimentation actif. Lorsque le module NFC 104 est dans le mode d'alimentation inactif, ou mode d'hibernation, autrement dit lorsque le module NFC 104 est dans un état inactif ou est inactif, seule une partie minimale des circuits du module NFC 104 est susceptible d'être alimentée. C'est dans ce mode d'alimentation que le module NFC 104 consomme le moins d'énergie.

La figure 3 représente, schématiquement et sous forme de blocs, d'une carte 300 de circuit intégré universel et son circuit d'alimentation 301 d'un dispositif électronique du type du dispositif 100 décrit en relation avec la figure 1. Plus particulièrement, la carte 300 est une carte 105 du dispositif 100 de la figure 1, et le circuit d'alimentation 301 est adapté à faire partie des circuits d'alimentation 103 du dispositif 100.

Le circuit 301 comprend deux bornes d'entrée BAT et SUPP-UICC-IN, et une borne de sortie SUPP-UICC-OUT. Les deux bornes d'entrée BAT et SUPP-UICC-IN sont reliées, de préférence connectées, à des sources d'alimentation, et la borne de sortie SUPP-UICC-OUT est reliée, de préférence connectée, à une borne d'alimentation VCC de la carte 300.

La borne d'entrée BAT reçoit une tension d'alimentation VBAT, référencée par rapport à une tension de référence, par exemple la masse, de la part d'une batterie. La tension d'alimentation VBAT est, par exemple, une tension continue. Selon un exemple, la batterie fait partie des circuits d'alimentation du dispositif électronique dont la carte 300 et le circuit d'alimentation 301 font partie. La borne d'entrée BAT est reliée au noeud de sortie SUPP-UICC-OUT par l'intermédiaire d'un circuit 302 (LDO + SRL) comprenant :
- un régulateur de tension linéaire (low-dropout regulator, LDO) adapté à ajuster la valeur de la tension VBAT pour qu'elle corresponde à la valeur de tension d'alimentation VCC-UICC-OUT attendue par la carte 300 ;
- une résistance de tirage (pull-down resistor) adaptée à protéger le régulateur de tension linéaire lors de son démarrage ; et
- un premier limiteur de pente de courant (slew rate limiter) adapté à protéger la borne d'alimentation VCC de la carte 300 contre les pics de courant.

La borne d'entrée SUPP-UICC-IN reçoit une tension d'alimentation VCC-UICC-IN, référencée par rapport à la tension de référence, de la part d'une autre source d'alimentation différente de la batterie. Cette source d'alimentation est, par exemple, une source d'alimentation principale du dispositif dans lequel sont compris la carte 300 et le circuit d'alimentation 301, qui est allumée lorsque ledit dispositif est sous tension et qui est éteinte lorsque ledit dispositif est hors-tension. Selon un exemple, la tension d'alimentation de cette source d'alimentation est transmise à la borne d'alimentation SUPP-UICC-IN par l'intermédiaire d'une ligne de transmission de données, par exemple par un modulateur-démodulateur, ou modem. La borne d'entrée SPP-UICC-IN est reliée au noeud de sortie SUPP-UICC-OUT par l'intermédiaire d'un interrupteur 303 commandé par un circuit 304 (Follow + SLR) comprenant :
- un suiveur de tension adapté à adapter l'impédance de la source d'alimentation d'où provient la tension VCC-UICC-IN à l'impédance d'entrée de la carte 300 ; et
- un deuxième limiteur de pente de courant (slew rate limiter) adapté à protéger la borne d'alimentation VCC de la carte 300 contre les pics de courant.

De plus, et selon un mode de réalisation, la tension VCC-UICC-IN de la borne d'entrée SUPP-UICC-IN est surveillée par un détecteur de tension 305 (VOLT DET).

Le fonctionnement du circuit d'alimentation 301 est le suivant. Un mode de fonctionnement plus détaillé du circuit d'alimentation 301 est décrit en relation avec la figure 4.

La carte 300 peut être alimentée en énergie par deux sources d'alimentation différentes, appelée source d'alimentation principale et batterie, la borne d'entrée SUPP-UICC-IN recevant une tension d'alimentation de la part de la source d'alimentation principale, et la borne d'entrée BAT recevant une tension d'alimentation de la part de la batterie, comme décrit ci-dessus. La batterie est le mode d'alimentation par défaut de la carte 300, et la source d'alimentation principale n'alimente la carte 300 que lorsqu'elle est allumée. De plus, l'alimentation en énergie de la carte 300 est commandée par le module NFC du dispositif comprenant la carte 300, et plus particulièrement par le mode d'alimentation de ce module NFC. Cet aspect est décrit plus en détails en relation avec la figure 4.

En particulier, lorsque la source d'alimentation principale est éteinte, par exemple lorsque le dispositif électronique comprenant la carte 300 et le circuit 301 est éteint, la circuit 304 commande l'ouverture de l'interrupteur 303, et le noeud de sortie SUPP-UICC-OUT reçoit une tension d'alimentation provenant de la borne BAT, par l'intermédiaire du circuit 302. Dans ce cas, la tension VCC-UICC-IN a une valeur de l'ordre de la valeur de la tension de référence.

Par contre, lorsque la source d'alimentation principale est allumée, par exemple lorsque ledit dispositif est allumé ou que la ligne de transmission de donnée transmettant la tension d'alimentation de ladite source d'alimentation principale est allumée, le circuit 304 commande la fermeture de l'interrupteur 303 pour fournir la tension VCC-UICC-IN à la borne de sortie SUPP-UICC-OUT. Dans ce cas, la tension VCC-UICC-IN a une valeur différente de la tension de référence et adaptée à alimenter la carte 300. Du côté de la borne d'entrée BAT, le circuit 302 n'est pas activé pour ne pas avoir deux sources d'alimentation alimentant la carte 300 en même temps, et plus particulièrement le régulateur de tension du circuit 302 n'est pas activé.

Selon une variante de réalisation, le mode de réalisation de la figure 3 pourrait être appliqué à l'alimentation de l'élément sécurisé d'un dispositif électronique du type du dispositif 100 décrit en relation avec la figure 1. Plus particulièrement, dans ce cas, la carte 300 est remplacée par un élément sécurisé 106 du dispositif 100 de la figure 1, et le circuit d'alimentation reçoit la tension VCC-UICC-IN de la part d'une source d'alimentation principale du dispositif électronique ou d'une source d'alimentation secondaire dédiée principalement à l'alimentation de l'élément sécurisé. La description de la figure 4 s'applique aussi à cette variante de réalisation.

La figure 4 représente trois chronogrammes illustrant le fonctionnement du circuit 301 décrit en relation avec la figure 3.

Plus particulièrement, la figure 4 illustre des chronogrammes :
- de la tension VCC-UICC-IN reçue en entrée par la borne d'entrée SUPP-UICC-IN ;
- de la tension VCC-UICC-OUT fournie par la borne de sortie SUPP-UICC-OUT ; et
- des états du module NFC du dispositif comprenant la carte 300 et son circuit d'alimentation 301.

Entre un état initial t0 et un instant t1, ultérieur à l'instant t0, le module NFC est dans un état où il ne consomme pas beaucoup d'énergie, par exemple dans un état en veille ou dans un état inactif (hachuré en figure 4). La source d'alimentation principale ne fournit pas de tension d'alimentation et la tension d'alimentation VCC-UICC-IN est à un niveau bas, c'est-à-dire à une valeur de tension de l'ordre de la tension de référence. De plus, le module NFC commande l'alimentation en énergie de la carte 300, et lorsque le module NFC est dans un état en veille ou dans un état inactif la carte 300 n'est pas alimentée. Ainsi la batterie n'est pas utilisée pour alimenter la carte 300, et la tension VCC-UICC-OUT a une valeur de l'ordre de la tension de référence.

Entre l'instant t1 et un instant t2, ultérieur à l'instant t1, la tension VCC-UICC-IN passe de l'état bas à un état haut, c'est-à-dire à un état où la valeur de la tension VCC-UICC-IN est adaptée à alimenter la carte 300. Selon un exemple, le dispositif comprenant la carte 300 et le circuit d'alimentation 301 est allumé, ou alors la ligne de transmission de donnée fournissant la tension VCC-UICC-IN est activée. Selon un mode de réalisation, le détecteur de tension 305 détecte ce changement d'état de la tension VCC-UICC-IN et en informe le module NFC qui passe alors dans un état actif. En passant dans un état actif le module NFC commande le démarrage du circuit 304, et plus particulièrement le démarrage du suiveur de tension et du limiteur de pente de courant compris dans le circuit 304. La tension VCC-UICC-OUT passe alors de l'état bas à l'état haut, par exemple, avec un léger retard par rapport à la tension VCC-UICC-IN. La carte 300 est alors alimentée par la source principale d'alimentation. De plus, pendant cette période, le module NFC désactive la possibilité du circuit 302 de démarrer automatiquement dès la détection d'un champ radiofréquence.

Entre l'instant t2 et un instant t3, ultérieur à l'instant t2, le module NFC, ayant commandé le démarrage du circuit 304, se remet dans le mode en veille ou inactif dans lequel il était avant l'instant t1. Le circuit 304 continue de fonctionner. Les tensions VCC-UICC-IN et VCC-UICC-OUT restent à un état haut et alimentent la carte 300.

Entre l'instant t3 et un instant t4, ultérieur à l'instant t3, la tension VCC-UICC-IN passe de l'état haut à l'état bas, et n'est plus en mesure d'alimenter la carte 300. Selon un exemple, le dispositif comprenant la carte 300 et le circuit d'alimentation 301 est éteint, ou alors la ligne de transmission de donnée fournissant la tension VCC-UICC-IN est désactivée. Dans le cas considéré ici, c'est-à-dire quand le module NFC était dans un état inactif avant d'être réveillé par le changement d'état de la tension VCC-UICC-IN, la tension VCC-UICC-OUT passe alors de l'état haut à l'état bas, par exemple, avec un léger retard par rapport à la tension VCC-UICC-OUT. En effet, selon un mode de réalisation, le détecteur de tension 305 détecte le changement d'état de la tension VCC-UICC-IN et en informe le module NFC qui passe alors dans un état actif. En passant dans un état actif le module NFC commande l'arrêt du circuit 304, et plus particulièrement du suiveur de tension et du limiteur de pente de courant compris dans le circuit 304. La carte 300 n'est alors plus alimentée par la source principale d'alimentation. Le module NFC étant dans un état de veille ou inactif avant l'instant t3, la batterie ne prend pas le relais pour alimenter la carte 300. De plus, pendant cette période, le module NFC réactive la possibilité du circuit 302 de démarrer automatiquement dès la détection d'un champ radiofréquence.

Cependant, si le module NFC avait été dans un état actif avant d'être réveillé par le changement d'état de la tension VCC-UICC-IN, la source d'alimentation de la tension VCC-UICC-OUT aurait alors été modifiée pour être la batterie. Pour cela, le module NFC aurait commandé l'activation du circuit 302, puis l'ouverture de l'interrupteur 303.

Entre l'instant t4 et un instant t5, ultérieur à l'instant t4, le module NFC, ayant commandé l'arrêt du circuit 304, se remet dans le mode en veille ou inactif dans lequel il était avant l'instant t3. Les tensions VCC-UICC-IN et VCC-UICC-OUT restent à un état bas, et la carte 300 n'est pas alimentée.

A un instant t5, ultérieur à l'instant t4, le module NFC passe de l'état en veille ou inactif à l'état actif. Selon un exemple, le module NFC a capté un champ radiofréquence et se prépare à entamer une communication en champ proche.

Entre un instant t6, ultérieur à l'instant t5, et un instant t7, ultérieur à l'instant t6, le module NFC commande l'alimentation en énergie de la carte 300. La tension VCC-UICC-IN étant toujours à un état bas, l'alimentation par la source d'alimentation principale du dispositif n'est pas possible, et la batterie est utilisée pour alimenter la carte 300. Ainsi le module NFC commande le démarrage du circuit 302 pour qu'il fournisse au noeud SUPP-UICC-OUT une tension adaptée à alimenter la carte 300. La tension VCC-UICC-OUT passe alors à un état haut. Le module NFC peut, par exemple, transmettre des données à la carte 300 si la communication en champ proche qu'il a entamée concerne la carte 300.

Selon un exemple, le démarrage du circuit 302 comprend, dans un premier temps, l'utilisation de la résistance de tirage pour assurer que la tension VCC-UICC-OUT au niveau du noeud de sortie SUPP-UICC-OUT est bien à un niveau bas. La résistance de tirage est, par exemple, utilisée pendant une durée de l'ordre de 400 µs. Le régulateur de tension du circuit 302 est ensuite démarré.

Un avantage du mode de réalisation présenté en relation avec les figures 3 et 4, et qu'en utilisant le détecteur de tension 305, le module NFC peut activer le circuit 304 et, plus particulièrement, peut activer le limiteur de pente de courant à chaque modification de l'état de la tension VCC-UICC-IN. Cela permet d'éviter des surconsommations en courant ou des pics de courant pouvant être générées à ces moments-là.

La figure 5 représente un chronogramme et deux diagrammes illustrant plus en détail des opérations réalisées lors du démarrage du module NFC 104 et des ou de la carte de circuit intégré universel 105 du dispositif 100 décrits en relation avec la figure 1. Dans l'exemple représenté ici, on ne considère qu'une seule carte 105 du dispositif 100. La figure 5 illustre plus précisément :
- un chronogramme RF-Field illustrant l'apparition d'un champ radiofréquence ;
- un diagramme temporel NFC-Op illustrant les opérations mises en oeuvre pour le démarrage du module NFC ; et
- un diagramme temporel UICC-Op illustrant les opérations mises en oeuvre pour le démarrage de la carte 105.

Le démarrage du module NFC 104 correspond au passage d'un état en veille ou inactif à l'état actif. Le démarrage du module NFC a, par exemple, lieu lorsque le module NFC détecte un champ radiofréquence. Il est à noter que lorsque le module NFC est en veille ou est inactif, il est capable de détecter un champ radiofréquence, et pour cela le module NFC effectue périodiquement (en variante, de façon continue) une recherche de champ radiofréquence. Selon un exemple de réalisation, lorsque le module NFC est en veille ou est inactif, il effectue une recherche de champ radiofréquence toutes les 0,5 à 5 ms, par exemple toutes les 1 à 2 ms. Et n'effectuant ces recherches que périodiquement, le module NFC baisse sa consommation en énergie.

De plus, le démarrage de la carte 104 correspond au passage d'un état éteint où la carte 104 ne peut être utilisée à un état sous tension où la carte 104 peut utiliser la plupart de ses fonctions.

Avant un instant initial t'0, aucun champ radiofréquence n'est présent ou ne peut être détecté par le module NFC 104, et le chronogramme RF-Field est à un état bas. Le module NFC 104 est en veille ou est inactif (HIB). La carte 105 est dans un état éteint (UICC OFF).

Entre l'instant initial t'0 et un instant t'1, ultérieur à l'instant t'0, un champ radiofréquence peut être détecté par le module NFC 104, et le chronogramme RF-Field passe à un état haut. Plus particulièrement, on considère qu'à partir de l'instant t'0 un champ radiofréquence est rendu détectable. Le champ reste détectable sans envoyer de commande pendant une durée Dmax pendant laquelle les dispositifs environnant sont censés s'apprêter pour être apte à capter ledit champ. Selon un exemple de réalisation, la durée Dmax est de l'ordre de 5 ms. Une fois la durée Dmax passée, le champ commence à envoyer des instructions et des données Data représentées par un rectangle hachuré en figure 5. Dans le cas précis de la figure 5, cela signifie que le module NFC 104 du dispositif doit être actif avant un instant noté t'0+Dmax. Le module NFC 104 ne détecte pas le champ radiofréquence automatique. Le module NFC est donc toujours en veille ou toujours inactif. De même, la carte 105 est toujours éteinte.

A un instant t'2, ultérieur à l'instant t'1, le module NFC 104 détecte le champ radiofréquence. Le module NFC 104 commence les différentes opérations comprises par son démarrage pour devenir actif. Pour cela, le module NFC 104 commande, dans un premier temps, le démarrage de certains circuits et composants du dispositif électronique (HW BOOT). La carte 105 est toujours éteinte. Plus particulièrement, pendant ce démarrage, les alimentations internes et les circuits d'alimentation du dispositif électronique sont démarrés.

Entre l'instant t'3 et un instant t'4, ultérieur à l'instant t'3, le module NFC 104 commande, selon un mode de réalisation, le démarrage des différents logiciels ou programmes du dispositif électronique (FW BOOT) et le démarrage de la carte 105.

Le démarrage des différents logiciels du dispositif électronique 100 est mis en oeuvre par le processeur 101 du dispositif 100.

Le démarrage de la carte 105 commence par le démarrage de l'alimentation de la carte de circuit intégré universel du dispositif électronique (UICC Alim). Plus particulièrement, le module NFC vérifie la tension délivrée par le circuit d'alimentation de la carte 105. Le démarrage automatique du régulateur de tension d'alimentation de la carte provoque le démarrage d'un compteur par le dispositif 100. Ce compteur est destiné à être lu ultérieurement et son contenu communiqué au logiciel du circuit NFC. Cela lui permet de déterminer quand la carte de circuit intégré universel (UICC) est alimentée par le régulateur de tension. Sur cette base, le logiciel du routeur NFC est en mesure de déterminer quand il peut initier une communication avec la carte UICC. En pratique, une fois que le circuit d'alimentation est apte à alimenter la carte 105, c'est-à-dire à un instant t'4, ultérieur à l'instant t'3, le démarrage de la carte 105 (UICC BOOT) peut commencer, et plus particulièrement le démarrage logiciel de la carte 105 peut démarrer.

A un instant t'5, ultérieur à l'instant t'3 et, par exemple, ultérieur à l'instant t'4, les logiciels du dispositif 100 sont en état de fonctionnement. Le module NFC peut alors passer dans un état actif (NFC FW ACTIVE) et se préparer à recevoir les instructions et données Data fournies par le champ radiofréquence.

A un instant t'6, ultérieur à l'instant t'4 et, par exemple, ultérieur à l'instant t'5, la carte 105 est en état pour fonctionner (UICC ON).

A un instant t'7, correspondant à l'instant t'0+Dmax, le module NFC, les circuits et composants du dispositif 100 commandés par le module NFC, et la carte 105 sont prêts à recevoir les instructions et commandes Data du champ radiofréquence.

Un avantage de ce mode de réalisation est que grâce à la présence du détecteur de tension 305 du circuit d'alimentation de la carte 105 (décrit en relation avec la figure 3), le module NFC peut démarrer ledit circuit d'alimentation sans nécessiter le démarrage des logiciels du dispositif 100. Dans certains cas, cela permet de démarrer le module NFC et la carte 105 dans une durée inférieure à Dmax, c'est-à-dire dans un exemple de réalisation dans une durée inférieure à 5 ms. Plus généralement, ce mode de réalisation permet un démarrage plus rapide du module NFC et des circuits et composants qu'il commande.

De plus, ce mode de réalisation peut être adapté à l'alimentation de l'élément sécurisé 106 du dispositif 100. En effet, comme pour la ou les cartes 105, le module NFC peut être adapté à commander le démarrage de l'alimentation de l'élément sécurisé 106 à chaque fois que le module NFC détecte un champs radiofréquence. Ainsi, selon un mode de réalisation, et de façon similaire à l'opération mise en oeuvre à l'instant t'3, une fois que le module NFC a démarré certains circuits et composants du dispositif 100 (HW BOOT), le module NFC commande simultanément :
- le démarrage du circuit d'alimentation de l'élément sécurisé 106 ; et
- le démarrage des différents logiciels du dispositif 100.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé de démarrage d'un dispositif électronique, comprenant :
- au moins une carte de circuit intégré universel (105 ; 300) ou au moins un élément sécurisé ;
- au moins un circuit d'alimentation (103 ; 301) de ladite carte ou dudit élément sécurisé ; et
- au moins un module de communication en champ proche,
dans lequel lorsque le module de communication en champ proche passe d'un état en veille ou d'un état inactif à un état actif, les opérations successives suivantes sont réalisées :
- les composants et circuits dudit dispositif électronique (100) sont démarrés ;
- des programmes du dispositif électronique (100) et ladite carte (105 ; 300) ou ledit élément sécurisé sont démarrés au même moment.

2. Dispositif électronique comportant :
- au moins une carte de circuit intégré universel (105 ; 300) ou au moins un élément sécurisé ;
- au moins un circuit d'alimentation (103 ; 301) de ladite carte ou de dudit élément sécurisé ;
- au moins un module de communication en champ proche,
dans lequel lorsque le module de communication en champ proche passe d'un état en veille ou d'un état inactif à un état actif, les opérations successives suivantes sont réalisées :
- les composants et circuits dudit dispositif électronique (100) sont démarrés ; et
- des logiciels du dispositif électronique (100) et ladite carte (105 ; 300) ou ledit élément sécurisé sont démarrés au même moment.

3. Procédé selon la revendication 1, ou dispositif selon la revendication 2, dans lequel le démarrage de ladite carte comprend les étapes successives suivantes :
- le démarrage du circuit d'alimentation (301) de ladite carte (105 ; 300) ou dudit élément sécurisé ; et
- le démarrage logiciel de ladite carte (105 ; 300) ou dudit élément sécurisé.

4. Procédé selon la revendication 1 ou 3, ou dispositif selon la revendication 2 ou 3, dans lequel, pendant le démarrage dudit circuit d'alimentation, un détecteur de tension vérifie si une première source de tension reliée audit circuit d'alimentation fournit une première tension d'alimentation égale à une tension de référence.

5. Procédé ou dispositif selon la revendication 4, dans lequel ledit circuit d'alimentation (301) alimente ladite carte ou ledit élément sécurisé avec, en outre, une deuxième source d'alimentation.

6. Procédé ou dispositif selon la revendication 4 ou 5, dans lequel le dispositif comprend un détecteur de tension (305) adapté à déterminer si ladite première source de tension fournit une première tension d'alimentation (VCC-UICC-IN) différente de la tension de référence.

7. Procédé ou dispositif selon l'une quelconque des revendications 4 à 6, dans lequel ledit au moins un module de communication en champ proche (104) est adapté à passer dans un mode actif à chaque fois que ledit détecteur de tension (305) détermine que ladite première tension d'alimentation (VCC-UICC-IN) est différente de la tension de référence.

8. Procédé ou dispositif selon l'une quelconque des revendications 4 à 7, dans lequel, dans le circuit d'alimentation (301) de ladite carte (105, 300) ou dudit élément sécurisé, la première tension d'alimentation de ladite première source de tension est fournie à ladite carte (300) ou audit élément sécurisé par l'intermédiaire d'un interrupteur (303) commandé par un premier circuit (304) comprenant un suiveur de tension et un premier limiteur de pente de courant.

9. Procédé ou dispositif selon la revendication 8, dans lequel dans lequel à chaque fois que ledit détecteur de tension (305) détermine que ladite première tension d'alimentation (VCC-UICC-IN) est différente de la tension de référence, ledit module de communication en champ proche (104) commande le démarrage dudit premier circuit (304).

10. Procédé ou dispositif selon la revendication 8 ou 9, dans lequel à chaque fois que ledit détecteur de tension (305) détermine que ladite première tension d'alimentation (VCC-UICC-IN) est égale à la tension de référence, ledit module de communication en champ proche (104) commande l'arrêt dudit premier circuit (304).
